# EUROPEAN PATENT SPECIFICATION

(11) **EP 4 043 180 B1**
(45) Date of publication and mention of the grant of the patent: **04.10.2023**
(21) Application number: 20874375.7
(22) Date of filing: 25.09.2020
(51) Int. Cl.: B29C 49/22, B29C 49/06, B32B 1/02, B32B 27/34, B32B 27/36, B32B 38/00, B65D 1/00, B29C 49/00, B29C 49/12, B29K 77/00, B29L 31/00, B29C 49/02, B32B 27/08, B65D 1/02

(54) **METHOD FOR PRODUCING MULTILAYER CONTAINER**
VERFAHREN ZUR HERSTELLUNG EINES MEHRSCHICHTIGEN BEHÄLTERS
PROCÉDÉ DE PRODUCTION D'UN RÉCIPIENT MULTICOUCHE

(30) Priority: 08.10.2019 JP 2019184863
(43) Date of publication of application: 17.08.2022
(73) Proprietor: MITSUBISHI GAS CHEMICAL COMPANY, INC., Chiyoda-ku Tokyo 100-8324 (JP)
(72) Inventor: YAMANAKA, Masaki, Kanagawa 254-0016 (JP); KOUNO, Kenji, Kanagawa 254-0016 (JP); MIYABE, Takanori, Kanagawa 254-0016 (JP)
(74) Representative: Vossius & Partner Patentanwälte Rechtsanwälte mbB
(86) International application number: PCT/JP2020/036188
(87) International publication number: WO 2021/070629

(56) References cited:
- WO-A1-2007/086331
- WO-A1-2018/198855
- JP-A- 2016 198 911
- US-A1- 2007 154 668
- US-A1- 2008 257 855
- US-A1- 2011 262 668

## Description

### Technical Field

The present invention relates to a method for producing a multilayered container.

### Background Art

Multilayered bodies and multilayered containers that use a polyester resin as a resin constituting an outer layer and an inner layer, and have a polyamide resin layer (barrier layer) containing a polyamide resin between the outer layer and the inner layer have been studied in the past (Patent Documents 1 and 2).
Patent Document 3 discloses a molded preform for blow molding a plastic container for pressurized applications, the preform having a base with a multilayer wall for forming a delamination and crack resistant multilayer footed container base.
Patent Document 4 discloses a multilayer plastic bottle comprising layers of PET and a polyamide such as, for example, MXD6, that is said to be free from occurrence of delamination upon dropping or upon exposure to impact.
Patent Document 5 discloses an injection blow-molded container comprising 60 to 95 parts by mass of polyamide resin (A) and 5 to 40 parts by mass of polyamide resin (B) with regard to the total content of polyamide resins (A) and (B) as 100 parts by mass, wherein the polyamide resin (A) contains diamine-derived structural units and dicarboxylic acid-derived structural units; the diamine-derived structural units contain a structural unit derived from xylylenediamine at a ratio of 70 mol% or more; the dicarboxylic acid-derived structural units contain a structural unit derived from an α,ω-linear aliphatic dicarboxylic acid having 4 to 12 carbon atoms at a ratio of 70 mol% or more and also contain a structural unit derived from isophthalic acid at a ratio of 30 mol% or less; and the polyamide resin (B) is a polyamide resin which contains no structural unit derived from xylylenediamine and carries an alkylene group having 5 to 12 carbon atoms.
Patent Document 6 discloses a method for filling a material to be stored into a multilayer bottle, wherein the multilayer bottle comprises an outermost layer, an innermost layer and at least one barrier layer placed between the outermost layer and the innermost layer.

### Citation List

### Patent Documents

Patent Document 1: JP 2016-198911 A
Patent Document 2: JP 2007-210209 A
Patent Document 3: US 2008/0257855 A1
Patent Document 4: US 2011/0262668 A1
Patent Document 5: WO 2018/198855 A1
Patent Document 6: WO 2007/086331 A1

### Summary of Invention

### Technical Problem

However, when such multilayered containers having a layer containing a polyester resin, and a polyamide resin layer containing a polyamide resin were examined by the present inventors, it was found that delamination may occur.

Thus, an object of the present invention is to solve the problem described above by providing a method for producing a multilayered container, which has a layer containing a polyester resin as a main component and a layer containing a polyamide resin as a main component and in which delamination is less likely to occur.

### Solution to Problem

For the object, as a result of study conducted by the inventors of the present invention, it was found that the object described above can be achieved by, when a multilayered container is produced, biaxially stretching and blow molding a preform, setting a storage elastic modulus G' of a polyamide resin at the time of the biaxially stretching and blow molding to a specific range, adjusting a moisture content of the polyamide resin layer of the preform immediately before the biaxially stretching and blow molding, and using a predetermined polyamide resin.

Specifically, the above problems can be solved by the **method recited in the appended claims.**

### Advantageous Effects of Invention

A method for producing a multilayered container, which has a layer containing a polyester resin as a main component and a layer containing a polyamide resin as a main component and in which delamination is less likely to occur, can be provided.

### Brief Description of Drawings

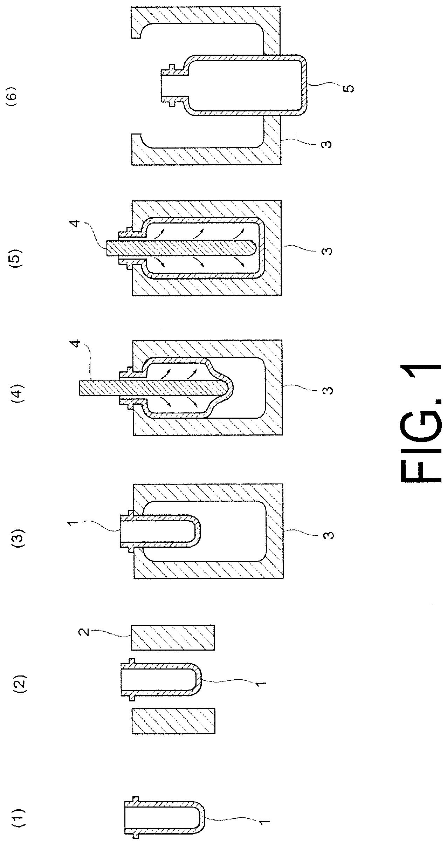

FIG. 1 is a schematic view illustrating production process of a multilayered container of the present invention.

### Description of Embodiments

Contents of the present invention will be described in detail below. In the present specification, "from ... to ..." or "of ... to ..." is used to mean that the numerical values described before and after "to" are included as the lower limit and the upper limit, respectively.

In the present specification, various physical property values and characteristic values are at 23°C unless otherwise noted.

The method for producing a multilayered container of the present invention is characterized by including biaxially stretching and blow molding a preform having a layer containing a polyester resin as a main component (hereinafter, also referred to as "polyester resin layer") and a layer containing a polyamide resin as a main component (hereinafter, also referred to as "polyamide resin layer"), a storage elastic modulus G' based on dynamic viscoelasticity measurement at a frequency of 1 Hz and a temperature of the preform at the time of the biaxially stretching and blow molding of the polyamide resin being 1 MPa or greater and less than 100 MPa, a moisture content of the layer containing the polyamide resin as the main component in the preform immediately before the biaxially stretching and blow molding being 0.5% or less, and the polyamide resin containing a xylylenediamine-based polyamide resin containing structural units derived from diamine and structural units derived from dicarboxylic acid, 70 mol% or greater of the structural units derived from diamine being derived from meta-xylylenediamine, from 80 to 97 mol% of the structural units derived from dicarboxylic acid being derived from an α,ω-straight chain aliphatic dicarboxylic acid having from 4 to 8 carbons and from 20 to 3 mol% being derived from aromatic dicarboxylic acid (provided that a total of the structural units derived from α,ω-straight chain aliphatic dicarboxylic acid having from 4 to 8 carbons and the structural units derived from aromatic dicarboxylic acid does not exceed 100 mol%).

By setting the storage elastic modulus G' of the polyamide resin to not less than the lower limit, a large residual stress caused in the container at the time of biaxially stretching and blow molding can be achieved. By this, higher resistance to stresses, such as impact and load, on the outer side of the resulting multilayered container can be achieved, and the delamination between the polyamide resin layer and the polyester resin layer can be suppressed. Furthermore, by setting the storage elastic modulus G' to not higher than the upper limit, delamination caused by shrinkage of the polyamide layer due to application of an excessive stress can be suppressed.

Furthermore, in the present invention, by setting the moisture content of the polyamide resin layer to 0.5% or less, it is presumed that the container can be formed without reducing the storage elastic modulus G' of the polyamide resin at the time of biaxially stretching and blow, and thus delamination can be more effectively suppressed.

Note that immediately before the biaxially stretching and blow molding refers to a stage at which production is performed by injection molding machine and, as necessary, a preform that has been stored is set to the biaxially stretching and blow molding machine to perform biaxially stretching and blow molding. Furthermore, at the time of biaxially stretching and blow molding refers to a stage in which a preform is heated to a predetermined temperature, set in a mold, and subjected to biaxially stretching and blow.

In the polyamide resin contained in the polyamide resin layer, the storage elastic modulus G' based on dynamic viscoelasticity measurement at a frequency of 1 Hz and a temperature of the preform at the time of the biaxially stretching and blow molding is 1 MPa or greater and less than 100 MPa. The lower limit of the storage elastic modulus G' is preferably 5 MPa or greater, more preferably 8 MPa or greater, even more preferably 10 MPa or greater, and yet even more preferably 15 MPa or more. Furthermore, the upper limit of the storage elastic modulus G' is preferably 70 MPa or less, more preferably 50 MPa or less, and even more preferably 30 MPa, and may be 25 MPa or less.

The storage elastic modulus G' in the case where two or more types of polyamide resins are contained in the polyamide resin layer is a measurement value measured by using a sample prepared by mixing the polyamide resins.

The storage elastic modulus G' is measured by a method described in Examples described below.

The moisture content of the layer containing a polyamide resin as a main component of the preform immediately before the biaxially stretching and blow molding is 0.5% or less. The upper limit of the moisture content is preferably 0.45% or less, more preferably 0.4% or less, even more preferably 0.34% or less, and yet even more preferably 0.31% or less. The lower limit of the moisture content is ideally 0, but adequate practical value can be still achieved even when the lower limit is 0.1% or more or 0.2% or more.

When the preform has two or more layers containing a polyamide resin as a main component, at least one layer is only required to satisfy the moisture content described above, and preferably all the layers containing a polyamide resin as a main component satisfy the moisture content described above.

The moisture content of the layer containing a polyamide resin as a main component of the preform is measured by a method described in Examples described below.

An embodiment of the method for producing of a multilayered container of the present invention will be described below with reference to FIG. 1. Of course, the method for producing a multilayered container of the present invention is not limited to the configuration illustrated in FIG. 1.

The multilayered container of the present invention is produced by subjecting a preform to biaxially stretching and blow molding. The multilayered container of the present invention is typically formed by a cold parison molding method.

Cold parison molding (two-stage molding) is a molding method in which an injection molded preform is cooled to room temperature, stored, reheated by another apparatus, and subjected to blow molding.

In FIG. 1, first, a preform is produced and adjusted to a predetermined moisture content (FIG. 1(1)). A preform 1 is preferably adjusted so as to have the moisture content in the predetermined range described above at the time of storage before the biaxially stretching and blow molding or during transfer from a preform molding apparatus to a blow molding apparatus. That is, the method for producing a multilayered container of the present invention preferably includes adjusting of the moisture content of the preform before the preform is subjected to the biaxially stretching and blow molding. Specifically, the moisture content is preferably adjusted by storing the preform in a moisture exclusion condition. Specifically, means such as storing the preform by moisture exclusion packaging, storing the preform in a dry chamber, or drying the preform can be employed. Furthermore, the moisture content of a raw material resin may be adjusted.

Next, the preform 1 is heated (FIG. 1(2)). Heating is performed using an infrared heater 2 or the like.

In the present invention, the heating temperature of the preform at the time of the biaxially stretching and blow molding is preferably not lower than a glass transition temperature (Tg) of the polyamide resin contained in the polyamide resin layer and 115°C or lower. By setting the heating temperature to the range described above, transparency of the resulting multilayered container is further improved, and resistance for delamination also tends to be further improved.

The heating temperature of the preform is preferably Tg + 2°C or higher, and more preferably Tg + 5°C or higher. More specifically, the heating temperature is preferably 90°C or higher, more preferably 95°C or higher, and even more preferably 99°C or higher, and may be 100°C or higher or 102°C or higher. The upper limit of the heating temperature of the preform is preferably Tg + 25°C or lower, and more preferably Tg + 20°C or lower. More specifically, the upper limit is more preferably 112°C or lower, and may be 110°C or lower or 107°C or lower.

Next, the heated preform is subjected to biaxially stretching and blow molding. That is, the preform is placed in a mold 3 ((3) of FIG. 1) and biaxially stretched and blow molded while being stretched by a stretching rod 4 ((4) and (5) of FIG. 1). The stretching method is, for example, a method in which the surface of a preform is heated, after which the preform is stretched in the axis direction by a mechanical means such as pressing with a core rod insert, and next, the stretched preform is stretched and blow molded in a transverse direction by blowing with high pressure air of normally from 2 to 4 MPa. Furthermore, to improve thermal resistance of the container, the degree of crystallinity of the preform may be increased. For example, a method exists in which the surface of a multilayer preform is heated, after which the preform is blow molded inside a mold of a temperature equal to or higher than the glass transition point (single blow molding). Furthermore, the blow molding method may also be a so-called double blow molding method that includes a primary blow molding step in which the preform is biaxially stretched and blow molded to larger than the final shape, a step in which the primary blow molded product is heated and thermally shrunk to mold a secondary intermediate molded product, and lastly, a secondary blow molding step in which this secondary intermediate molded product is blow molded into a final container shape. The temperature at the time of the blow molding is preferably from 90 to 120°C, and more preferably from 95 to 115°C. Furthermore, with respect to the Tg of the polyamide resin, the temperature is preferably not lower than Tg and Tg + 20°C or lower. The temperature at the time of blow molding is a temperature at which the preform has passed through a preform heating zone of a blow molding machine and heating is completed.

After blow molding, the mold 3 is removed to obtain a multilayered container 5 ((6) of FIG. 1).

In addition, as the method for producing a multilayered container of the present invention, the descriptions of paragraphs [0070]-[0074] of JP 2016-198912 A, paragraphs [0085] to [0119] of JP 2016-169027 A, and JP 60-232952 A can be referenced within a range that does not depart from the **scope** of the present invention, **as defined by the appended claims** herein.

Next, the preform to be used in the production method of the present invention will be described. The preform to be used in the present invention has a layer containing a polyester resin as a main component (polyester resin layer) and a layer containing a polyamide resin as a main component (polyamide resin layer) as described above. The preform may further has a layer containing a second polyester resin as a main component (second polyester resin layer), and the polyester resin layer, the polyamide resin layer, and the second polyester resin layer may be laminated in the order. The polyester resin layer and the second polyester resin layer may be the same or different.

First, the layer containing a polyester resin as a main component (polyester resin layer) will be described.

The polyester resin layer is a layer containing a polyester resin as a main component. Here, the term "main component" means that the polyester resin is the component with the largest content amount amongst components contained in the polyester resin layer. The amount of polyester resin contained in the polyester resin layer is preferably 80 mass% or more, more preferably 90 mass% or more, even more preferably 95 mass% or more, and yet even more preferably 98 mass% or more.

The inherent viscosity of the polyester resin is preferably from 0.50 to 0.90 dL/g.

For polyester resins, one type of polyester resin may be contained alone, or two or more types of polyester resins may be contained. When two or more types of polyester resins are contained, the total amount thereof is preferably in the above range.

Furthermore, various physical property values of polyester resins in a case where two or more types of polyester resins are contained are physical property values of a mixture unless otherwise noted. In this case, the mixture means a mixture after melt-kneading.

The first embodiment of the polyester resin contained in the polyester resin layer is a polyester resin having a melting point.

The melting point of the polyester resin of the first embodiment of the polyester resin is preferably from 100 to 300°C, more preferably from 200 to 300°C, and even more preferably from 220 to 295°C. The melting point is measured in accordance with a method described in Examples below. The same applies to the melting points described below.

The glass transition temperature of the polyester resin of the first embodiment is preferably lower than 90°C, more preferably 85°C or lower, and even more preferably 80°C or lower. The lower limit of the glass transition temperature is preferably 60°C or higher, more preferably 65°C or higher, and even more preferably 70°C or higher. The use of such a polyester resin tends to provide superior molding processability of the container. The glass transition temperature is measured in accordance with a method described in Examples below. The same applies to the glass transition temperatures described below.

Such a polyester resin is a polyester resin containing structural units derived from dicarboxylic acid and structural units derived from diol, in which 70 mol% or more (preferably 80 mol% or more, more preferably 90 mol% or more, and even more preferably 95 mol% or more) of the structural units derived from dicarboxylic acid is derived from at least one type selected from terephthalic acid and esters thereof, and 70 mol% or more (preferably 80 mol% or more, more preferably 90 mol% or more, and even more preferably 95 mol% or more) of the structural units derived from diol is derived from ethylene glycol. Here, the polyester resin of the first embodiment **containing** structural units derived from dicarboxylic acid and structural units derived from diol, but may also include a structural unit besides the structural units derived from dicarboxylic acid and the structural units derived from diol, or other moieties such as terminal groups. Typically, 95 mass% or more, and preferably 98 mass% or more of the polyester resin used in the present invention contains the structural units derived from dicarboxylic acid and the structural units derived from diol. The same applies to other polyester resins.

For details on the polyester resin that can be used in the first embodiment, the disclosure of paragraphs [0064] to [0080] of JP 2016-169027 A can be referenced.

The second embodiment of the polyester resin contained in the polyester resin layer is an amorphous polyester resin. A multilayered container with superior transparency is obtained by using an amorphous polyester resin.

The glass transition temperature of the amorphous polyester resin is preferably 90°C or higher, and more preferably 100°C or higher. The upper limit of the glass transition temperature is preferably 155°C or lower, and more preferably 150°C or lower. A multilayered container with superior heat resistance is obtained by using such a polyester resin.

One example of the amorphous polyester resin is a polyester resin containing structural units derived from dicarboxylic acid and structural units derived from diol, in which 70 mol% or more (preferably 80 mol% or more, more preferably 90 mol% or more, and even more preferably 95 mol% or more) of the structural units derived from dicarboxylic acid is derived from at least one type selected from terephthalic acid, naphthalene dicarboxylic acid, and esters thereof, and of the structural units derived from diol, from 5 to 60 mol% (preferably from 15 to 60 mol%) is derived from spiroglycol and from 95 to 40 mol% (preferably from 85 to 40 mol%) is derived from ethylene glycol.

Another example of the amorphous polyester resin is a polyester resin containing structural units derived from dicarboxylic acid and structural units derived from diol, in which 80 mol% or more (preferably 85 mol% or more, more preferably 90 mol% or more, and even more preferably 95 mol% or more) of the structural units derived from dicarboxylic acid is derived from at least one type selected from terephthalic acid, naphthalene dicarboxylic acid, and esters thereof, and of the structural units derived from diol, from 90 to 10 mol% (preferably from 85 to 40 mol%) is derived from 1,4-cyclohexanedimethanol, and from 10 to 90 mol% (preferably from 15 to 60 mol%) is derived from ethylene glycol.

As the polyester resin used in the second embodiment, the polyester resins described in paragraphs [0010] to [0021] of JP 2006-111718 A, the polyester resins described in JP 2017-105873 A, and the polyester resins described in WO 2013/168804 can be referenced.

**The polyester resin layer of the present invention may contain other components besides the polyester resin within a range that does not depart from the scope of the present invention as defined by the appended claims.**
Specifically, various additives can be added such as antioxidants, optical stabilizers, UV absorbers, plasticizers, bulking agents, matting agents, dryness adjusting agents, antistatic agents, anti-settling agents, surfactants, flow modifiers, drying oils, waxes, colorants, reinforcing agents, surface smoothing agents, leveling agents, curing reaction accelerators, and thickening agents. For details on the other components, refer to the disclosure in paragraph [0026] of JP 2006-111718 A.

Next, the layer containing a polyamide resin as a main component (polyamide resin layer) is described.

The polyamide resin layer is a layer containing a polyamide resin as a main component. Here, the term "main component" means that the polyamide resin is the component with the largest content amount amongst components contained in the polyamide resin layer. The amount of the polyamide resin is preferably 80 mass% or more, more preferably 90 mass% or more, even more preferably 95 mass% or more, and yet even more preferably 98 mass% or more.

Furthermore, the polyamide resin layer is preferably substantially free of polyester resin (further, thermoplastic resins besides the polyamide resin). "Substantially free" refers to a content of the polyester resin (further, thermoplastic resins besides the polyamide resin) being 2 mass% or less of the polyamide resin layer, and preferably 1 mass% or less, and more preferably 0.1 mass% or less, and may be 0 mass%.

One type of polyamide resin may be contained alone, or two or more types of polyamide resins may be contained. When two or more types of polyamide resins are contained, the total amount thereof is preferably in the above range.

The glass transition temperature of the polyamide resin is preferably 80°C or higher, more preferably 85°C or higher, and even more preferably 90°C or higher. By setting the glass transition temperature to be not lower than the lower limit, appropriate storage elastic modulus G' can be achieved at the time of the biaxially stretching and blow in the temperature range at the time of the blow molding, and the delamination of the container can be more efficiently suppressed. Furthermore, the glass transition temperature of the polyamide resin is preferably 115°C or lower, more preferably 110°C or lower, and even more preferably 105°C or lower, and may be 101°C or lower. By setting the glass transition temperature to be not higher than the upper limit, the effect of achieving excellent moldability in a multilayered form with the polyester resin can be effectively achieved.

In the case where two or more types of polyamide resins are contained in the polyamide resin layer, the glass transition temperature of the polyamide resin is a glass transition temperature obtained by measuring the mixture. However, in the case where two or more glass transition points are observed, a higher glass transition temperature among these is taken as a glass transition temperature of the resin composition. In this case, the mixture means a mixture after melt-kneading.

In the present invention, the polyamide resin contains a xylylenediamine-based polyamide resin containing structural units derived from diamine and structural units derived from dicarboxylic acid, 70 mol% or more of the structural units derived from diamine being derived from meta-xylylenediamine, from 80 to 97 mol% of the structural units derived from dicarboxylic acid being derived from an α,ω-straight chain aliphatic dicarboxylic acid having from 4 to 8 carbons and from 20 to 3 mol% being derived from aromatic dicarboxylic acid (provided that a total of the structural units derived from α,ω-straight chain aliphatic dicarboxylic acid having from 4 to 8 carbons and the structural units derived from aromatic dicarboxylic acid does not exceed 100 mol%).

Of the structural units derived from diamine of the xylylenediamine-based polyamide resin, more preferably 75 mol% or more, even more preferably 80 mol% or more, yet even more preferably 90 mol% or more, and yet even more preferably 95 mol% or more are derived from meta-xylylenediamine.

Examples of the raw material diamine component besides meta-xylylenediamine include aliphatic diamines, such as para-xylylenediamine, tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, p-phenylenediamine, and bis(aminomethyl)naphthalene. One type of these can be used, or two or more types can be mixed and used.

Of the raw material dicarboxylic acid component of the xylylenediamine-based polyamide resin, from 80 to 97 mol% is derived from α,ω-straight chain aliphatic dicarboxylic acid having from 4 to 8 carbons and from 20 to 3 mol% is derived from aromatic dicarboxylic acid. However, the total amount of the structural units derived from α,ω-straight chain aliphatic dicarboxylic acid having from 4 to 8 carbons and the structural units derived from aromatic dicarboxylic acid does not exceed 100 mol%.

Examples of the α,ω-straight chain aliphatic dicarboxylic acid having from 4 to 8 carbons include succinic acid, glutaric acid, pimelic acid, suberic acid, azelaic acid, and adipic acid. One type of these can be used, or two or more types can be mixed and used. As the α,ω-straight chain aliphatic dicarboxylic acid having from 4 to 8 carbons, adipic acid is preferred.

Examples of the aromatic dicarboxylic acid include phthalic acid compounds, such as isophthalic acid, terephthalic acid, and orthophthalic acid; and naphthalenedicarboxylic acid isomers, such as 1,2-naphthalenedicarboxylic acid, 1,3-naphthalenedicarboxylic acid, 1,4-naphthalenedicarboxylic acid, 2,5-furandicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type of these can be used, or two or more types can be mixed and used. As the aromatic dicarboxylic acid, isophthalic acid is preferred.

Examples of the raw material dicarboxylic acid component other than the α,ω-straight chain aliphatic dicarboxylic acid having from 4 to 8 carbons and the aromatic dicarboxylic acid include aliphatic dicarboxylic acid having 9 or more carbons and alicyclic dicarboxylic acid. Also, a mixture of these may be used.

Examples of the aliphatic dicarboxylic acid having 9 or more carbons include sebacic acid, undecanedioic acid, and dodecanedioic acid.

Examples of the alicyclic dicarboxylic acid include 1,3-cyclohexanedicarboxylic acid and 1,4-cyclohexanedicarboxylic acid.

Note that, as described above, the xylylenediamine-based polyamide resin contains structural units derived from diamine and structural units derived from dicarboxylic acid, but it does not completely exclude the structural units other than these units, and needless to say, it may contain structural units derived from lactams such as ε-caprolactam and laurolactam, and aliphatic aminocarboxylic acids such as aminocaproic acid and aminoundecanoic acid. In the present invention, the total of the structural units derived from diamine and structural units derived from dicarboxylic acid in the xylylenediamine-based polyamide resin preferably accounts for 90% or more, more preferably 95% or more, and even more preferably 99% or more, of the total structural units other than terminal groups.

The polyamide resin contained in the polyamide resin layer may be only contains the xylylenediamine-based polyamide resin or may contain another polyamide resin. Details of such another polyamide resin is described below.

The xylylenediamine-based polyamide resin may be a crystalline polyamide resin or an amorphous polyamide resin but is typically a crystalline polyamide resin. In the present invention, when a crystalline polyamide resin is used in the polyamide resin layer, oriented crystallization occurs by the biaxially stretching and blow, and barrier properties are improved and creep of a bottle can be suppressed.

Note that the amorphous polyamide resin refers to a polyamide resin having a crystalline melting enthalpy ΔHm of 5 J/g or less. The crystal melting enthalpy (ΔHm) is measured in accordance with a method described in Examples below.

Meanwhile, in the case where two or more types of polyamide resins are contained in the polyamide resin layer in the present invention, at least one type of the contained polyamide resins is preferably an amorphous resin. When an amorphous polyamide resin is used in the polyamide resin layer, the storage elastic modulus G' of the polyamide resin tends to be high, and delamination of a container can be more efficiently suppressed.

An embodiment of the polyamide resin of the present invention includes a mixture of a crystalline polyamide resin and an amorphous polyamide resin. When a mixture is used, a polyamide resin can have both benefit of the crystalline polyamide resin and benefit of the amorphous polyamide resin.

When a mixture of a crystalline polyamide resin and an amorphous polyamide resin is used, the blending proportions are preferably from 60 to 95 parts by mass of the crystalline polyamide resin and from 40 to 5 parts by mass of the amorphous polyamide resin, more preferably from 70 to 95 parts by mass of the crystalline polyamide resin and from 30 to 5 parts by mass of the amorphous polyamide resin, even more preferably from 80 to 95 parts by mass of the crystalline polyamide resin and from 20 to 5 parts by mass of the amorphous polyamide resin, and yet even more preferably from 85 to 95 parts by mass of the crystalline polyamide resin and from 15 to 5 parts by mass of the amorphous polyamide resin.

When a mixture of the crystalline polyamide resin and the amorphous polyamide resin is used, a mixture of a crystalline xylylenediamine-based polyamide resin and an amorphous polyamide resin is preferred.

In particular, preferably, the polyamide resin contained in the polyamide resin layer further contains an amorphous polyamide resin (besides those corresponding to the xylylenediamine-based polyamide resin), and a ratio of the amorphous polyamide resin (besides those corresponding to the xylylenediamine-based polyamide resin) to the xylylenediamine-based polyamide resin is from 40 to 5 parts by mass of the amorphous polyamide resin with respect to from 60 to 95 parts by mass of the xylylenediamine-based polyamide resin.

As the preferred ranges of the blending proportions of the xylylenediamine-based polyamide resin and the amorphous polyamide resin (besides those corresponding to the xylylenediamine-based polyamide resin), from 70 to 95 parts by mass of the xylylenediamine-based polyamide resin and from 30 to 5 parts by mass of the amorphous polyamide resin (besides those corresponding to the xylylenediamine-based polyamide resin) is more preferred, from 80 to 95 parts by mass of the xylylenediamine-based polyamide resin and from 20 to 5 parts by mass of the amorphous polyamide resin (besides those corresponding to the xylylenediamine-based polyamide resin) is even more preferred, and from 85 to 95 parts by mass of the xylylenediamine-based polyamide resin and from 15 to 5 parts by mass of the amorphous polyamide resin (besides those corresponding to the xylylenediamine-based polyamide resin) is yet more preferred.

A preferred embodiment of the amorphous polyamide resin will be described.

An embodiment of the amorphous polyamide resin is a polyamide resin (hereinafter, also referred to as "first amorphous polyamide resin") containing structural units derived from diamine and structural units derived from dicarboxylic acid, and 70 mol% or more of the structural units derived from diamine is derived from xylylenediamine, and of the structural units derived from dicarboxylic acid, from 30 to 65 mol% is derived from α,ω-straight chain aliphatic dicarboxylic acid having from 4 to 8 carbons, and from 70 to 35 mol% is derived from isophthalic acid (provided that the total does not exceed 100 mol%). By compounding such a first amorphous polyamide resin, the transparency and oxygen barrier properties of a container can be further improved.

Of the structural units derived from diamine in the first amorphous polyamide resin, more preferably 75 mol% or more, even more preferably 80 mol% or more, even more preferably 90 mol% or more, and yet even more preferably 95 mol% or more is derived from xylylenediamine (preferably at least one type of meta-xylylenediamine or para-xylylenediamine). The xylylenediamine preferably contains at least meta-xylylenediamine, more preferably 20 mol% or more of the xylylenediamine is meta-xylylenediamine, even more preferably 50 mol% or more of the xylylenediamine is meta-xylylenediamine, yet even more preferably 70 mol% or more of the xylylenediamine is meta-xylylenediamine, and yet even more preferably 90 mol% or more of the xylylenediamine is meta-xylylenediamine.

Examples of the raw material diamine component other than the xylylenediamine include a raw material diamine component other than the xylylenediamine among the raw material diamines of the xylylenediamine-based polyamide resin described above.

As described above, of the structural units derived from dicarboxylic acid in the first amorphous polyamide resin, from 30 to 65 mol% is derived from α,ω-straight chain aliphatic dicarboxylic acid having from 4 to 8 carbons (preferably adipic acid) and from 70 to 35 mol% is derived from isophthalic acid.

Of the total dicarboxylic acids constituting the structural units derived from dicarboxylic acid in the first amorphous polyamide resin, the lower limit of the proportion of isophthalic acid is 35 mol% or more, preferably 40 mol% or more, and more preferably 41 mol% or more. The upper limit of the proportion of the isophthalic acid is 70 mol% or less, preferably 67 mol% or less, more preferably 65 mol% or less, even more preferably 62 mol% or less, and yet even more preferably 60 mol% or less, and may be 58 mol% or less. Setting the proportion to such a range tends to further improve the oxygen barrier properties of the resulting multilayered container.

Among the total dicarboxylic acids constituting the structural units derived from dicarboxylic acid in the first amorphous polyamide resin, the lower limit of the proportion of α,ω-straight chain aliphatic dicarboxylic acid having from 4 to 8 carbons (preferably adipic acid) is 30 mol% or more, preferably 33 mol% or more, more preferably 35 mol% or more, even more preferably 38 mol% or more, and yet even more preferably 40 mol% or more, and may be 42 mol% or more. The upper limit of the proportion of the α,ω-straight chain aliphatic dicarboxylic acid having from 4 to 8 carbons is 65 mol% or less, preferably 60 mol% or less, and more preferably 59 mol% or less. Setting the proportion to such a range tends to further improve the oxygen barrier properties of the multilayered container of the present invention.

Among the total dicarboxylic acids constituting the structural units derived from dicarboxylic acid in the first amorphous polyamide resin, the total proportion of the isophthalic acid and the α,ω-straight chain aliphatic dicarboxylic acid having from 4 to 8 carbons is preferably 90 mol% or more, more preferably 95 mol% or more, and even more preferably 98 mol% or more, and may be 100 mol%. Setting the total proportion to such a proportion tends to further improve the transparency of the multilayered container of the present invention.

Examples of a dicarboxylic acid component besides the α,ω-straight chain aliphatic dicarboxylic acid having from 4 to 8 carbons and the isophthalic acid in the first amorphous polyamide resin include components other than the α,ω-straight chain aliphatic dicarboxylic acid having from 4 to 8 carbons and the isophthalic acid among those described as raw material dicarboxylic acid components of the xylylenediamine-based polyamide resin described above.

The first amorphous polyamide resin is preferably substantially free of structural unit derived from terephthalic acid. "Substantially free" means 5 mol% or less, preferably 3 mol% or less, and even more preferably 1 mol% or less, of the molar amount of isophthalic acid being contained in the first amorphous polyamide resin. With such a configuration, suitable moldability of a container is maintained, and the gas barrier properties is less likely to change due to humidity.

Another embodiment of the amorphous polyamide resin is a polyamide resin (hereinafter, also referred to as "second amorphous polyamide resin") containing structural units derived from diamine and structural units derived from dicarboxylic acid, and 70 mol% or more of the structural units derived from diamine is derived from hexamethylenediamine, and 55 mol% or more of the structural units derived from dicarboxylic acid is derived from isophthalic acid and 15 mol% or more of the structural units derived from dicarboxylic acid is derived from terephthalic acid (provided that the total of the isophthalic acid and the terephthalic acid does not exceed 100 mol%). By compounding the second amorphous polyamide resin, delamination resistance of the resulting multilayered container can be further improved.

In the second amorphous polyamide resin, of the structural units derived from diamine, preferably 80 mol% or more, more preferably 90 mol% or more, even more preferably 95 mol% or more, and yet even more preferably 99 mol% or more is derived from hexamethylenediamine. Examples of the diamine other than hexamethylenediamine that can be used as a raw material diamine component of the second amorphous polyamide resin includes components other than the hexamethylenediamine among those described as raw material diamine components of the xylylenediamine-based polyamide resin of the first embodiment described above.

In the second amorphous polyamide resin, 55 mol% or more of structural units derived from dicarboxylic acid is derived from isophthalic acid, and the proportion thereof is preferably 60 mol% or more. The proportion of the structural units derived from isophthalic acid is also preferably 85 mol% or less, more preferably 80 mol% or less, and even more preferably 75 mol% or less.

In addition, in second amorphous polyamide resin, 15 mol% or more of the structural units derived from dicarboxylic acid is derived from terephthalic acid, and the proportion thereof is preferably 20 mol% or more, and more preferably 25 mol% or more. The structural unit derived from terephthalic acid is also more preferably 45 mol% or less, and even more preferably 40 mol% or less. In the second amorphous polyamide resin, of the structural units derived from dicarboxylic acid, preferably 80 mol% or more, more preferably 90 mol% or more, even more preferably 95 mol% or more, and yet even more preferably 99 mol% or more contains isophthalic acid and terephthalic acid. Examples of the dicarboxylic acid, other than the isophthalic acid and the terephthalic acid, that is suitably used as a raw material dicarboxylic acid component of the second amorphous polyamide resin include dicarboxylic acids other than isophthalic acid and terephthalic acid among those described as raw material dicarboxylic acid components of the xylylenediamine-based polyamide resin of the first embodiment.

**Furthermore, the polyamide resin layer used in the present invention may contain another polyamide resin other than those described above within a range that does not depart from the scope of the present invention as defined by the appended claims.**

Specific examples thereof include polyamide 6, 11, 12, 46, 66, 610, 612, 61, 6/66, 6/6T, and 66/6T; poly(trimethylhexamethylene terephthalamide), poly bis(4-aminocyclohexyl)methane dodecamide, poly bis(3-methyl-4-aminocyclohexyl)methane dodecamide, poly(undecamethylene hexahydroterephthalamide), and xylylenediamine-based polyamide resins described in detail below. "I" described above denotes an isophthalic acid component, and "T" a terephthalic acid component. As the polyamide resin used in the present invention, the polyamide resins described in paragraphs [0011] to [0013] of JP 2011-132550, polyamide resins described in WO 2012/014772, polyamide resins described in WO 2016/208272, polyamide resins described in WO 2017/134946, polyamide resins described in WO 2017/090556, polyamide resins described in WO 2018/074234, and polyamide resins described in WO 2018/155171 can be referenced.

In the case where barrier properties are required to the multilayered container of the present invention, the polyamide resin contained in the polyamide resin layer is preferably a polyamide resin having barrier properties. For example, a polyamide resin having a low value of oxygen transmission rate is preferred. Specifically, a polyamide resin having an oxygen transmission coefficient of 5.0 cc·mm/(m²·day·atm) or less (more preferably 1.0 cc·mm/(m²·day·atm) or less) as measured according to ASTM D3985 at a relative humidity of 60% and a temperature of 23°C.

The number average molecular weight of the polyamide resin used in the present invention is preferably from 5000 to 200000, and more preferably from 10000 to 50000. The number average molecular weight is measured according to the description in paragraph [0057] of WO 2019/026499.

Furthermore, the polyamide resin layer of the present invention may contain additives within a range that does not impair the purpose of the present invention, including: inorganic fillers such as glass fibers and carbon fibers; plate-shaped inorganic fillers such as glass flakes, talc, kaolin, mica, montmorillonite, and organo-modified clay; impact resistance modifiers such as various elastomers; crystal nucleating agents; lubricants such as fatty acid amide-based lubricants and fatty acid amide type compounds, and higher fatty acid metal salts (e.g., calcium stearate); antioxidants such as copper compounds, organic or inorganic halogen-based compounds, hindered phenol-based compounds, hindered amine-based compounds, hydrazine-based compounds, sulfur-based compounds, and phosphorus-based compounds; coloring inhibitors; spreaders; UV absorbers such as benzotriazole-based UV absorbers; additives such as mold release agents, plasticizers, colorants, and flame retardants; and compounds containing oxidation reaction accelerators, benzoquinones, anthraquinones, and naphthoquinones.

Next, the layer structures of a preform and of the multilayered container obtained from the preform are described.

The preform and the multilayered container used in the present invention are each a multilayered container having at least one layer containing a polyester resin as a main component (polyester resin layer) and one layer containing a polyamide resin as a main component (polyamide resin layer). The polyester resin layer and the polyamide resin layer are usually in contact with each other.

The number of layers constituting the multilayered container is preferably at least 3. In the present invention, an embodiment including at least two polyester resin layers and at least one polyamide resin layer is exemplified. In this case, lamination is preferably performed in the order of the polyester resin layer, the polyamide resin layer, and the polyester resin layer.

More specifically, the number of layers constituting the multilayered container is more preferably from 3 to 10, and more preferably from 3 to 5.

The number of polyester resin layers in the multilayered container is preferably from 1 to 5, and more preferably from 2 to 4. The number of polyamide resin layers in the multilayered container is preferably from 1 to 3, and more preferably 1 or 2.

For example, the multilayered container may have a polyester resin layer/polyamide resin layer structure (the polyester resin layer is an inner layer) or a polyamide resin layer/polyester resin layer structure (the polyamide resin layer is an inner layer) including one polyester resin layer and one polyamide resin layer, may have a three-layer structure of a polyester resin layer/polyamide resin layer/polyester resin layer including two polyester resin layers and one polyamide resin layer, and may have a five-layer structure of a polyester resin layer/ polyamide resin layer/polyester resin layer/polyamide resin layer/polyester resin layer.

From the perspective of achieving superior delamination resistance, the polyamide resin layer is preferably arranged at the center or at an inner side, and is more preferably arranged at an inner side. "Polyamide resin layer is arranged at the center" means that, in a cross section of the multilayered container in the thickness direction, the polyamide resin layer is present near the center in the thickness direction. "Polyamide resin layer is arranged at an inner side" means that, in a cross section of the multilayered container in the thickness direction, the polyamide resin layer is present at a position near the inner surface side in the thickness direction. As the position of the polyamide resin layer of the present invention, an aspect in which the intermediate layer is the polyamide resin layer is exemplified in JP 02-229023 A .

In addition to the polyester resin layer and the polyamide resin layer, the multilayered container of the present invention may include any layer depending on the desired performance and the like.

### Multilayered Container

The shape of the multilayered container of the present invention is not particularly limited, examples thereof include molded containers such as bottles and cups, and bottles are preferred.

Also, it is not necessary for all parts of the bottle to include the polyester resin layer and the polyamide resin layer. For example, an aspect is exemplified in which the polyamide resin layer is included in the body section of a bottle, but the polyamide resin layer is not included in the vicinity of the opening (mouth plug section). However, the polyamide resin layer is preferably present up to near the opening of the bottle because such a configuration provides even higher barrier performance.

The multilayered container (preferably a bottle) of the present invention preferably has an oxygen transmission rate of 0.02 cc/(bottle day-0.21 atm) or less. The lower limit is not particularly limited but is practically 0.0001 cc/(bottle-day-0.21 atm) or more. The oxygen transmission rate is measured by a method described in Examples below.

From the perspective of content storage performance, the volume of the multilayered container of the present invention is preferably from 0.1 to 2.0 L, more preferably from 0.2 to 1.5 L, and even more preferably from 0.3 to 1.0 L.

The thickness of the inner layer (e.g., polyester resin layer) of the multilayered container of the present invention is preferably 0.01 mm or more, more preferably 0.03 mm or more, and even more preferably 0.05 mm or more, and preferably 2.0 mm or less, more preferably 1.5 mm or less, and even more preferably 1.0 mm or less.

The thickness of the outer layer (e.g., polyester resin layer) is preferably 0.01 mm or more, and more preferably 0.05 mm or more, and is preferably 2.0 mm or less, more preferably 1.5 mm or less, and even more preferably 1.0 mm or less.

The thickness of the polyamide resin layer is preferably 0.005 mm or more, more preferably 0.01 mm or more, and even more preferably 0.02 mm or more, and is preferably 0.2 mm or less, more preferably 0.15 mm or less, and even more preferably 0.1 mm or less. When two or more polyamide resin layers are provided, it is preferable that the total thickness of the polyamide resin layers is the above thickness.

When two or more polyamide resin layers are provided and an intermediate layer is provided between the polyamide resin layers, the thickness of the intermediate layer is preferably 0.01 mm or more, more preferably 0.03 mm or more, even more preferably 0.05 mm or more, and preferably 2.0 mm or less, more preferably 1.5 mm or less, and even more preferably 1.0 mm or less.

The mass of the polyamide resin layer in the multilayered container (in particular, a bottle) of the present invention is preferably from 1 to 20 mass%, more preferably from 2 to 15 mass%, and particularly preferably from 3 to 10 mass%, relative to the total mass of the multilayered container. By setting the mass of the polyamide resin layer within the above range, a multilayered container having good gas barrier properties can be obtained.

The target content to be stored in the multilayered container of the present invention is not particularly limited. Examples include food products, cosmetics, pharmaceuticals, toiletries, mechanical, electrical and electronic components, oils, and resins. The multilayered container of the present invention can be suitably used particularly as a container for storing food products.

Examples of the food products include processed fishery products, processed livestock products, rice, and liquid foods. The multilayered container of the present invention is particularly suitable for storing foods that are easily affected by oxygen. For details thereof, refer to the descriptions in paragraphs [0032] to [0035] of JP 2011-037199 A .

Specific examples of the food products include beverages such as vegetable juice, fruit juice, teas, coffee and coffee beverages, milk and milk beverages, mineral water, ionic beverages, alcoholic beverages, fermented milk beverages, and soy milk; gel foods such as tofu, egg tofus, jellies, puddings, soft adzuki-bean jelly, mousse, yogurts, an apricot bean curd; seasonings such as sauces, soy sauce, ketchup, noodle soup bases, Japanese sauces, vinegar, mirin, dressings, jams, mayonnaise, miso, pickles, and grated spices; processed meat products such as salami, ham, sausage, yakitori, meatballs, hamburger, grilled pork, and beef jerky; processed fishery products such as kamaboko, shellfish, boiled fish, and tube-shaped fish paste cakes; processed rice products such as rice gruel, cooked rice, rice casserole, and red rice; sauces such as meat sauce, mabo sauce, pasta sauce, curry, stews, and hash sauce; dairy products such as cheese, butter, cream, and condensed milk; processed egg products such as boiled eggs and soft boiled eggs; boiled vegetables and boiled beans; side dishes such as fried foods, steamed foods, stir fry, boiled foods, and baked foods; Japanese pickled vegetables; noodles and pastas such as udon, soba, and spaghetti; and fruit preserved in syrups.

Depending on the target content to be stored, the multilayered container may be disinfected or sterilized using ultraviolet rays, electron beams, gamma rays, X-rays, and the like.

### Examples

The present invention will be described more specifically with reference to examples below. Materials, amounts used, proportions, processing details, processing procedures, and the like described in the following examples can be appropriately changed as long as they do not **depart from the scope of the present invention as defined by the appended claims. Thus, the scope of the present invention is not limited to the specific examples described below.**

### Raw Materials

### MXD6I (Isophthalic Acid (PIA) 6 mol%):

A polyamide resin synthesized from meta-xylylenediamine and dicarboxylic acid (94 mol% of adipic acid and 6 mol% of isophthalic acid), MX nylon K7007C, available from Mitsubishi Gas Chemical Company, Inc., number average molecular weight: 22000, crystalline resin

### MXD6I (PIA 15 mol%):

A polyamide resin synthesized according to the synthesis example described below, crystalline resin

### MXD6I (PIA 50 mol%):

A polyamide resin synthesized according to the synthesis example described below, amorphous resin

### 6I/6T:

A polyamide resin synthesized from hexamethylenediamine, isophthalic acid, and terephthalic acid, G21, available from EMS, number average molecular weight: 15000, amorphous resin

### PA6:

UBE Nylon 1022B, available from Ube Industries, Ltd., number average molecular weight: 22000

### MXD 10:

A polyamide resin synthesized from meta-xylylenediamine and sebacic acid, LEXTER 8000, available from Mitsubishi Gas Chemical Company, Inc., number average molecular weight: 15000, crystalline resin

### MXD6:

A polyamide resin synthesized from meta-xylylenediamine and adipic acid, MX nylon S6007, available from Mitsubishi Gas Chemical Company, Inc., number average molecular weight: 22000, crystalline resin

### Synthesis of MXD6I (PIA 15 mol%)

A reaction vessel equipped with a stirrer, a partial condenser, a total condenser, a thermometer, a dropping funnel, a nitrogen introduction tube, and a strand die was charged with weighed raw materials including 10201 g (69.80 mol) of adipic acid, 2047 g (12.32 mol) of isophthalic acid, 1.73 g of calcium hypophosphite (Ca(H₂PO₂)₂) (30 ppm by mass as a phosphorus atom concentration in the polyamide resin), and 1.11 g of sodium acetate, and then sufficiently purged with nitrogen, after which the reaction vessel was filled with nitrogen to an internal pressure of 0.4 MPa, and the inside of the system was heated to 190°C while stirring under a small nitrogen gas flow. The molar ratio of sodium acetate/calcium hypophosphite was 1.33.

To this, 11185 g (82.12 mol) of meta-xylylenediamine was added dropwise under stirring, and the temperature inside the system was continuously increased while removing condensed water that was produced, to outside of the system. After dropwise addition of the meta-xylylenediamine was completed, the internal temperature was increased, and when the temperature reached 265°C, the pressure inside the reaction vessel was reduced. The internal temperature was then further increased, and a melt polycondensation reaction was continued for 10 minutes at 270°C. Subsequently, the inside of the system was pressurized with nitrogen, and the obtained polymer was removed from the strand die and pelletized to obtain approximately 20 kg of polyamide resin pellets (MXD6I (PIA 15 mol%)). The obtained polyamide resin (MXD6I (PIA 15 mol%)) was vacuum dried at 90°C for 24 hours.

The number average molecular weight of the obtained polyamide resin (MXD61 (PIA 15 mol%)) was 13000.

### Synthesis of MXD6I (PIA 50 mol%)

A reaction vessel equipped with a stirrer, a partial condenser, a total condenser, a thermometer, a dropping funnel, a nitrogen gas introduction tube, and a strand die was charged with 6001 g (41.06 mol) of adipic acid, 6822 g (41.06 mol) of isophthalic acid, 7.23 g of sodium hypophosphite monohydrate (NaH₂PO₂) (100 ppm by mass as a phosphorus atom concentration in the polyamide resin), and 7.44 g of sodium acetate, which were weighed accurately, and then sufficiently purged with nitrogen, after which the reaction vessel was filled with nitrogen to an internal pressure of 0.4 MPa, and the inside of the system was heated to 190°C while stirring under a small nitrogen gas flow. The molar ratio of sodium acetate/sodium hypophosphite monohydrate was 1.33.

To this, 11185 g (82.12 mol) of meta-xylylenediamine was added dropwise under stirring, and the temperature inside the system was continuously increased while removing condensed water that was produced, to outside of the system. After dropwise addition of the meta-xylylenediamine was completed, the internal temperature was increased, and when the temperature reached 265°C, the pressure inside the reaction vessel was reduced. The internal temperature was then further increased, and a melt polycondensation reaction was continued for 10 minutes at 270°C. Subsequently, the inside of the system was pressurized with nitrogen, and the obtained polymer was removed from the strand die and pelletized to obtain approximately 20 kg of polyamide resin pellets (MXD6I (PIA 50 mol%)). The obtained polyamide resin (MXD6I (PIA 50 mol%)) was vacuum dried at 90°C for 24 hours.

It was found that the obtained polyamide resin (MXD6I (PIA 50 mol%)) had a crystal melting enthalpy ΔHm of substantially 0 J/g in the temperature raising process, and was amorphous. The number average molecular weight was 13000.

### Glass Transition Temperature, Melting Point, and Crystal Melting Enthalpy

Differential scanning calorimetry measurements were carried out in accordance with JIS K7121 and K7122. A differential scanning calorimeter was used to perform measurements. The resin pellets were crushed and placed into a measurement pan of the differential scanning calorimeter, and then pretreated by increasing the temperature to 300°C at a temperature increase rate of 10°C/min under a nitrogen atmosphere, followed by rapid cooling, after which the measurements were performed. As the measurement conditions, the temperature was increased to 300°C at a temperature increase rate of 10°C/min, and then maintained at 300°C for 5 minutes, after which the temperature was reduced to 100°C at a temperature decrease rate of - 5°C/min, and measurements were then carried out to determine the glass transition temperature (Tg), the melting point (Tm), and the crystal melting enthalpy (ΔHm).

As the differential scanning calorimeter, the "DSC-60" available from Shimadzu Corporation was used.

Note that, when a mixture of two or more types of resins is used as the resin, the physical property values described above are values of the resin after melt-kneading.

### Measurement of Storage Elastic Modulus G'

The storage elastic modulus G' of the polyamide resin was measured according to the following method.

To form the composition of the polyamide resin layer listed in Table 1, in the case where one type of polyamide resin was used, pellets were used as is, and for an embodiment where two or more types of polyamide resins were used, pellets were dry-blended and supplied into a single screw extruder with a T-die and kneaded. By melt-extrusion from the die at an extrusion temperature of 260°C, a film having a width of 150 mm and a thickness of 500 µm was obtained. After moisture adjustment was performed on the obtained film in a manner that the film had the preform moisture content listed in Table 1, the film was cut into a strip shape having a 5 mm width and a 40 mm length, the sample was subjected to dynamic viscoelasticity test by using a dynamic viscoelasticity measurement device in the following conditions, and thus a storage elastic modulus G' at a temperature of the preform listed in Table 1 was measured. Herein, the temperature of the preform refers to a temperature of the preform at the time of the biaxially stretching and blow molding, and specifically refers to a temperature at which the preform has passed through a preform heating zone of a blow molding machine and heating was completed and which was measured by a non-contact thermometer.
Measurement mode: Tensile mode
Amplitude: 10 µm
Frequency: 1 Hz
Temperature increase rate: 2°C/min

Note that, in the present example, PTM-30, available from PLABOR Research Laboratory of Plastics Technology Co., Ltd., was used as the single screw extruder with a T-die, and EXSTAR DMA6100, available from SII, was used as the dynamic viscoelasticity measurement device. However, in the case where the extruder and/or the device is not available due to discontinued production or the like, another extruder and the like having equivalent performances can be used.

PET: Thermoplastic polyester resin synthesized from terephthalic acid and ethylene glycol, Unipet BK2180, available from Mitsubishi Chemical Corporation, melting point of 248°C, glass transition temperature of75°C, and inherent viscosity = 0.83 dL/g. At the time of use, a material that had been dried in a dehumidifying dryer at 150°C for 8 hours was used. The inherent viscosity was measured using an Ubbelohde-type viscometer with the polyester resin dissolved in a mixed solvent of phenol/1,1,2,2-tetrachloroethane = 6/4 (mass ratio) and maintained at 25°C.

### Examples 1 and 2 and Comparative Examples 1 to 4

### Production of Preform

An injection molding machine (model SE-DU130CI, available from Sumitomo Heavy Industries, Ltd.) with two injection cylinders, and a two-piece multilayered hot runner mold (available from Kortec, Inc.) were used to produce a preform partially having a three-layer structure of (Y)/(X)/(Y) under the conditions indicated below.

Specifically, first, as the material constituting the layer (Y), a thermoplastic polyester resin (PET) was injected from one of the injection cylinders into a cavity of a mold, and while the injection state of the layer (Y) was maintained, a polyamide resin having the composition of the polyamide resin layer listed in Table 1 was injected as the material constituting the layer (X) that becomes the polyamide resin layer, from the other injection cylinder along with the PET constituting the layer (Y). Lastly, a necessary amount of the PET constituting the layer (Y) was injected to fill the cavity, and thereby (25 g of) a preform partially having a three-layer structure of (Y)/(X)/(Y) was obtained. The shape of the preform was a parison form with an overall length of 92 mm, an outer diameter of 22 mm, and a wall thickness of 3.9 mm. The preform was subjected to moisture exclusion packaging immediately after the production and stored in this condition until immediately before the start of biaxially stretching and blow described below.

### Molding Conditions

Skin-side (Y) injection cylinder temperature: 285°C
Core-side (X) injection cylinder temperature: 265°C
Resin flow path temperature in mold: 290°C
Mold cooling water temperature: 15°C
Cycle time: 33 s

### Measurement of Moisture Content

The moisture content of the preform was measured according to the following method.

The moisture exclusion packaged preform was taken out and, after the layer (X) and the layer (Y) were separated, the layer (X) was subjected to measurement by using a Karl Fischer moisture meter at 230°C for 30 minutes in an nitrogen atmosphere.

As the Karl Fischer moisture meter, GT-200 available from Mitsubishi Chemical Analytech was used.

In the case where the preform was not moisture exclusion packaged, the moisture content measured immediately before the start of biaxially stretching and blow was used.

Note that the unit of moisture content is mass%. In the present specification, the unit may be abbreviated as "%".

### Method for Producing Multilayered Container

Petaloid-type bottles (multilayered containers) were obtained by biaxially stretching and blow molding the preforms using a twin screw stretch blow molding device (model EFB1000ET, available from Frontier Inc.). The overall length of each bottle (multilayered container) was 223 mm, the outer diameter was 65 mm, and the internal volume was 500 mL (surface area: 0.04 m², body section average thickness: 0.33 mm), and the bottom part was petaloid shaped. No dimples were provided in the body section. The biaxial stretch blow molding conditions were as indicated below. The proportion of the layer (X) with respect to the total mass of the obtained bottle (multilayered container) was 5 mass%.
Temperature of preform: Temperature listed in Table 1 (°C)
Primary blow pressure: 0.9 MPa
Secondary blow pressure: 2.5 MPa
Primary blow delay time: 0.30 sec
Primary blow time: 0.30 sec
Secondary blow time: 2.0 sec
Blow exhaust time: 0.6 sec
Mold temperature: 30°C

### Delamination Property

For the obtained multilayered container, the delamination property was evaluated as described below.

First, each of the multilayered container obtained as described above was filled with 500 mL of colored carbonated water (4.2 gas volume), and capped, and then the bottles were allowed to stand for 7 days at 23°C. Thereafter, side impact test was conducted by giving an impact on a bottle side part (position that was 123 mm above the bottom part) by a pendulum provided with a weight for the impact load (2825 g). The delamination locations became cloudy and could be visually distinguished, and therefore the presence or absence of delamination of the multilayered containers was determined visually. Note that every multilayered container for which delamination occurred even partially was identified as a bottle in which delamination occurred. The number of tested multilayered containers was five, and the delamination property was evaluated based on a value obtained by averaging the number of impact times until delamination occurred.

The results are shown in Table 1.

### Oxygen Transmission Rate (OTR)

For the obtained multilayered container, the oxygen transmission rate was evaluated as described below.

Specifically, the multilayered containers produced in Examples and Comparative Examples were each filled with 100 mL of water, and under conditions of an oxygen partial pressure of 0.21 atm, a multilayered container internal humidity of 100% RH (relative humidity), an external humidity of 50% RH, and a temperature of 23°C, nitrogen at 1 atm was circulated inside the multilayered container at 20 mL/min, and the amount of oxygen included in the nitrogen after circulating inside the multilayered container for 200 hours was detected using a coulometric sensor, and thereby the oxygen transmission rate was measured. The unit was represented by cc/(bottle-day-0.21 atm).

An oxygen transmission rate measuring device, product name "OX-TRAN 2/61", available from MOCON Inc., was used.

The results are shown in Table 1.

### Examples 3 and 4

### Production of Preform

An injection molding machine (model SE-DU130CI, available from Sumitomo Heavy Industries, Ltd.) with two injection cylinders, and a two-piece multilayered hot runner mold (available from Kortec, Inc.) were used to produce a preform partially having a three-layer structure of (Y)/(X)/(Y) under the conditions indicated below.

Specifically, first, as the material constituting the layer (Y), a thermoplastic polyester resin (PET) was injected from one of the injection cylinders into a cavity of a mold, and while the injection state of the layer (Y) was maintained, a mixture of two types of polyamide resin pellets was dry-blended to form the composition of the polyamide resin layer listed in Table 1, and injected as the material constituting the layer (X) that becomes the polyamide resin layer, from the other injection cylinder along with the PET constituting the layer (Y). Lastly, a necessary amount of the PET constituting the layer (Y) was injected to fill the cavity, and thereby (25 g of) a preform partially having a three-layer structure of (Y)/(X)/(Y) was obtained. The shape of the preform was a parison form with an overall length of 92 mm, an outer diameter of 22 mm, and a wall thickness of 3.9 mm. The preform was subjected to moisture exclusion packaging immediately after the production and stored in this condition until immediately before the start of biaxially stretching and blow described below.

### Molding Conditions

Skin-side (Y) injection cylinder temperature: 285°C
Core-side (X) injection cylinder temperature: 265°C
Resin flow path temperature in mold: 290°C
Mold cooling water temperature: 15°C
Cycle time: 33 s

The measurement of moisture content, production of multilayered containers, evaluation of delamination property, and evaluation of oxygen transmission rate (OTR) were performed in the same manner as those in Example 1. The results are shown in Table 1.

**[Table 1]**

| | Composition of polyamide resin layer | Storage elastic modulus G' (MPa) | Tg of polyamide resin (°C) | Moisture content of preform (%) | Temperature of preform (°C) | Delamination property (times) | OTR (cc/(bottle·day·0.21 atm)) |
|---|---|---|---|---|---|---|---|
| Example 1 | MXD6I (PIA 6 mol%) | 9.5 | 92 | 0.40 | 105 | 44 | 0.011 |
| Example 2 | MXD61 (PIA 15 mol%) | 21 | 98 | 0.32 | 105 | 71 | 0.012 |
| Example 3 | Mixture of MXD6I (PIA 6 mol%) (90 parts by mass) and MXD61 (PIA 50 mol%) (10 parts by mass) | 18 | 95 | 0.29 | 105 | 126 | 0.012 |
| Example 4 | Mixture of MXD61 (PIA 6 mol%) (90 parts by mass) and 6l/6T (10 parts by mass) | 19 | 94 | 0.30 | 105 | 132 | 0.018 |
| Comparative Example 1 | PA6 | 470 | 48 | 0.36 | 105 | 14 | 0.064 |
| Comparative Example 2 | MXD10 | 102 | 60 | 0.29 | 105 | 6 | 0.034 |
| Comparative Example 3 | MXD6 | 0.9 | 85 | 0.62 | 105 | 9 | 0.011 |
| Comparative Example 4 | MXD6 | 3 | 85 | 0.35 | 110 | 24 | 0.011 |

As is clear from the results described above, the multilayered containers obtained by the production method of the present invention had excellent delamination property. Furthermore, the values of oxygen transmission rate were low (Examples 1 to 4).

On the other hand, in the case where the storage elastic modulus G' was high (Comparative Examples 1 and 2), the delamination property was poor. Furthermore, also in the case where the moisture content of the preform was high and the storage elastic modulus G' was low (Comparative Example 3), the delamination property was poor. Furthermore, in the case where no aromatic dicarboxylic acid was contained as the dicarboxylic acid constituting the polyamide resin (Comparative Examples 1 to 4), the delamination property was poor regardless of the storage elastic modulus G'.

### Reference Signs List

1 Preform
2 Heater
3 Mold
4 Stretching rod
5 Multilayered container

## Claims

1. A method for producing a multilayered container (5), the method comprising biaxially stretching and blow molding a preform (1) having a layer containing a polyester resin as a main component and a layer containing a polyamide resin as a main component,
a storage elastic modulus G' based on dynamic viscoelasticity measurement at a frequency of 1 Hz and a temperature of the preform (1) at the time of the biaxially stretching and blow molding of the polyamide resin being 1 MPa or more and less than 100 MPa,
a moisture content of the layer containing the polyamide resin as the main component in the preform (1) immediately before the biaxially stretching and blow molding being 0.5% or less, and
the polyamide resin containing a xylylenediamine-based polyamide resin containing structural units derived from diamine and structural units derived from dicarboxylic acid, 70 mol% or more of the structural units derived from diamine being derived from meta-xylylenediamine, and from 80 to 97 mol% of the structural units derived from dicarboxylic acid being derived from an α,ω)-straight chain aliphatic dicarboxylic acid having from 4 to 8 carbons and from 20 to 3 mol% being derived from aromatic dicarboxylic acid (provided that a total of the structural units derived from α,ω-straight chain aliphatic dicarboxylic acid having from 4 to 8 carbons and the structural units derived from aromatic dicarboxylic acid does not exceed 100 mol%).

2. The method for producing a multilayered container (5) according to claim 1, wherein a heating temperature of the preform (1) at the time of the biaxially stretching and blow molding is not lower than a glass transition temperature of the polyamide resin and 115 °C or lower.

3. The method for producing a multilayered container (5) according to claim 1 or 2, wherein the storage elastic modulus G' is from 5 to 30 MPa.

4. The method for producing a multilayered container (5) according to claim 1 or 2, wherein the storage elastic modulus G' is from 15 to 30 MPa.

5. The method for producing a multilayered container (5) according to any one of claims 1 to 4, wherein the moisture content is from 0.1 to 0.45%.

6. The method for producing a multilayered container (5) according to any one of claims 1 to 4, wherein the moisture content is from 0.1 to 0.34%.

7. The method for producing a multilayered container (5) according to any one of claims 1 to 6, wherein the polyester resin contains structural units derived from diol and structural units derived from dicarboxylic acid, 70 mol% or more of the structural units derived from dicarboxylic acid is derived from at least one type selected from the group consisting of terephthalic acid and esters thereof and 70 mol% or more of the structural units derived from diol is derived from ethylene glycol.

8. The method for producing a multilayered container (5) according to any one of claims 1 to 7, wherein at least one type of the polyamide resin is an amorphous resin.

9. The method for producing a multilayered container (5) according to any one of claims 1 to 8, wherein
the polyamide resin further contains an amorphous polyamide resin (besides those corresponding to the xylylenediamine-based polyamide resin), and
a ratio of the amorphous polyamide resin (besides those corresponding to the xylylenediamine-based polyamide resin) to the xylylenediamine-based polyamide resin is from 40 to 5 parts by mass of the amorphous polyamide resin with respect to from 60 to 95 parts by mass of the xylylenediamine-based polyamide resin.

10. The method for producing a multilayered container (5) according to any one of claims 1 to 9, wherein, in the xylylenediamine-based polyamide resin, the α,ω-straight chain aliphatic dicarboxylic acid having from 4 to 8 carbons is adipic acid, and the aromatic dicarboxylic acid is isophthalic acid.

11. The method for producing a multilayered container (5) according to any one of claims 1 to 10, the method further comprising producing the preform (1) and adjusting a moisture content in the produced preform (1).

12. The method for producing a multilayered container (5) according to claim 11, wherein the moisture content is adjusted by storing the produced preform (1) in a moisture exclusion condition.

13. The method for producing a multilayered container (5) according to any one of claims 1 to 12, wherein the preform (1) further has a layer containing a second polyester resin as a main component, and
the layer containing the polyester resin as the main component, the layer containing the polyamide resin as the main component, and the layer containing the second polyester resin as the main component are laminated in this order.

## Patentansprüche

1. Ein Verfahren zur Herstellung eines mehrschichtigen Behälters (5), wobei das Verfahren biaxiales Recken und Blasformen eines Vorformlings (1) mit einer Schicht, die ein Polyesterharz als einen Hauptbestandteil enthält, und einer Schicht, die ein Polyamidharz als einen Hauptbestandteil enthält, umfasst,
wobei ein Speicherelastizitätsmodul G', basierend auf einer Messung der dynamischen Viskoelastizität bei einer Frequenz von 1 Hz und einer Temperatur des Vorformlings (1) zum Zeitpunkt des biaxialen Reckens und Blasformens des Polyamidharzes 1 MPa oder mehr und weniger als 100 MPa beträgt,
wobei ein Feuchtigkeitsgehalt der Schicht, die das Polyamidharz als den Hauptbestandteil enthält, in dem Vorformling (1) unmittelbar vor dem biaxialen Recken und Blasformen 0,5% oder weniger beträgt und
wobei das Polyamidharz ein Polyamidharz auf Xylylendiamin-Basis enthält, das von Diamin abgeleitete Struktureinheiten und von Dicarbonsäure abgeleitete Struktureinheiten enthält, wobei 70 Mol-% oder mehr der von Diamin abgeleiteten Struktureinheiten von meta-Xylylendiamin abgeleitet sind, und 80 bis 97 Mol-% der von Dicarbonsäure abgeleiteten Struktureinheiten von einer α,ω-geradkettigen aliphatischen Dicarbonsäure mit 4 bis 8 Kohlenstoffen abgeleitet sind und 20 bis 3 Mol- % von aromatischer Dicarbonsäure abgeleitet sind (mit der Maßgabe, dass eine Summe der von α,ω-geradkettiger aliphatischer Dicarbonsäure mit 4 bis 8 Kohlenstoffen abgeleiteten Struktureinheiten und der von aromatischer Dicarbonsäure abgeleiteten Struktureinheiten 100 Mol-% nicht überschreitet).

2. Das Verfahren zur Herstellung eines mehrschichtigen Behälters (5) nach Anspruch 1, wobei eine Erwärmungstemperatur des Vorformlings (1) zum Zeitpunkt des biaxialen Reckens und Blasformens nicht niedriger als eine Glasübergangstemperatur des Polyamidharzes und 115°C oder niedriger ist.

3. Das Verfahren zur Herstellung eines mehrschichtigen Behälters (5) nach Anspruch 1 oder 2, wobei der Speicherelastizitätsmodul G' 5 bis 30 MPa beträgt.

4. Das Verfahren zur Herstellung eines mehrschichtigen Behälters (5) nach Anspruch 1 oder 2, wobei der Speicherelastizitätsmodul G' 15 bis 30 MPa beträgt.

5. Das Verfahren zur Herstellung eines mehrschichtigen Behälters (5) nach einem der Ansprüche 1 bis 4, wobei der Feuchtigkeitsgehalt 0,1 bis 0,45% beträgt.

6. Das Verfahren zur Herstellung eines mehrschichtigen Behälters (5) nach einem der Ansprüche 1 bis 4, wobei der Feuchtigkeitsgehalt 0,1 bis 0,34% beträgt.

7. Das Verfahren zur Herstellung eines mehrschichtigen Behälters (5) nach einem der Ansprüche 1 bis 6, wobei das Polyesterharz von Diol abgeleitete Struktureinheiten und von Dicarbonsäure abgeleitete Struktureinheiten enthält, wobei 70 Mol-% oder mehr der von Dicarbonsäure abgeleiteten Struktureinheiten von mindestens einer Art, ausgewählt aus der Gruppe bestehend aus Terephthalsäure und Estern davon, abgeleitet sind und 70 Mol-% oder mehr der von Diol abgeleiteten Struktureinheiten von Ethylenglycol abgeleitet sind.

8. Das Verfahren zur Herstellung eines mehrschichtigen Behälters (5) nach einem der Ansprüche 1 bis 7, wobei mindestens eine Art des Polyamidharzes ein amorphes Harz ist.

9. Das Verfahren zur Herstellung eines mehrschichtigen Behälters (5) nach einem der Ansprüche 1 bis 8, wobei
das Polyamidharz ferner ein amorphes Polyamidharz (neben denen, die dem Polyamidharz auf Xylylendiamin-Basis entsprechen), enthält und
ein Verhältnis des amorphen Polyamidharzes (neben denen, die dem Polyamidharz auf Xylylendiamin-Basis entsprechen) zu dem Polyamidharz auf Xylylendiamin-Basis 40 bis 5 Massenteile des amorphen Polyamidharzes bezogen auf 60 bis 95 Massenteile des Polyamidharzes auf Xylylendiamin-Basis beträgt.

10. Das Verfahren zur Herstellung eines mehrschichtigen Behälters (5) nach einem der Ansprüche 1 bis 9, wobei in dem Polyamidharz auf Xylylendiamin-Basis die α,ω-geradkettige aliphatische Dicarbonsäure mit 4 bis 8 Kohlenstoffen Adipinsäure ist und die aromatische Dicarbonsäure Isophthalsäure ist.

11. Das Verfahren zur Herstellung eines mehrschichtigen Behälters (5) nach einem der Ansprüche 1 bis 10, wobei das Verfahren ferner Herstellen des Vorformlings (1) und Einstellen eines Feuchtigkeitsgehalts in dem hergestellten Vorformling (1) umfasst.

12. Das Verfahren zur Herstellung eines mehrschichtigen Behälters (5) nach Anspruch 11, wobei der Feuchtigkeitsgehalt durch Lagern des hergestellten Vorformlings (1) unter Feuchtigkeitsausschlussbedingungen eingestellt wird.

13. Das Verfahren zur Herstellung eines mehrschichtigen Behälters (5) nach einem der Ansprüche 1 bis 12, wobei der Vorformling (1) ferner eine Schicht aufweist, die ein zweites Polyesterharz als einen Hauptbestandteil enthält, und
die Schicht, die das Polyesterharz als den Hauptbestandteil enthält, die Schicht, die das Polyamidharz als den Hauptbestandteil enthält, und die Schicht, die das zweite Polyesterharz als den Hauptbestandteil enthält, in dieser Reihenfolge laminiert sind.

## Revendications

1. Méthode pour produire un récipient multicouche (5), la méthode comprenant un étirage biaxial et un moulage par soufflage d'une ébauche (1) ayant une couche contenant une résine de polyester en tant que composant principal et une couche contenant une résine de polyamide en tant que composant principal,
le module élastique au stockage G', basé sur une mesure de viscoélasticité dynamique à une fréquence de 1 Hz et à la température de l'ébauche (1) au moment de l'étirage biaxial et du moulage par soufflage de la résine de polyamide, étant de 1 MPa ou plus et inférieur à 100 MPa,
la teneur en humidité de la couche contenant la résine de polyamide en tant que composant principal dans l'ébauche (1) immédiatement avant l'étirage biaxial et le moulage par soufflage étant de 0,5 % ou moins, et
la résine de polyamide contenant une résine de polyamide à base de xylylènediamine contenant des motifs structurels dérivés de diamine et des motifs structurels dérivés d'acide dicarboxylique, 70 % en moles ou plus des motifs structurels dérivés de diamine dérivant de méta-xylylènediamine, et 80 à 97 % en moles des motifs structurels dérivés d'acide dicarboxylique dérivant d'un acide α,ω-dicarboxylique aliphatique à chaîne droite ayant de 4 à 8 atomes de carbone, et 20 à 3 % en moles dérivant d'acide dicarboxylique aromatique (sous réserve que le total des motifs structurels dérivés d'acide α,ω-dicarboxylique aliphatique à chaîne droite ayant de 4 à 8 atomes de carbone et des motifs structurels dérivés d'acide dicarboxylique aromatique ne dépassent pas 100 % en moles).

2. Méthode pour produire un récipient multicouche (5) selon la revendication 1, dans laquelle la température de chauffage de l'ébauche (1) au moment de l'étirage biaxial et du moulage par soufflage n'est pas inférieure à la température de transition vitreuse de la résine de polyamide et est de 115 °C ou moins.

3. Méthode pour produire un récipient multicouche (5) selon la revendication 1 ou 2, dans laquelle le module élastique au stockage G' est de 5 à 30 MPa.

4. Méthode pour produire un récipient multicouche (5) selon la revendication 1 ou 2, dans laquelle le module élastique au stockage G' est de 15 à 30 MPa.

5. Méthode pour produire un récipient multicouche (5) selon l'une quelconque des revendications 1 à 4, dans laquelle la teneur en humidité est de 0,1 à 0,45 %.

6. Méthode pour produire un récipient multicouche (5) selon l'une quelconque des revendications 1 à 4, dans laquelle la teneur en humidité est de 0,1 à 0,34 %.

7. Méthode pour produire un récipient multicouche (5) selon l'une quelconque des revendications 1 à 6, dans laquelle la résine de polyester contient des motifs structurels dérivés de diol et des motifs structurels dérivés d'acide dicarboxylique, 70 % en moles ou plus des motifs structurels dérivés d'acide dicarboxylique dérivent d'au moins un type choisi dans le groupe constitué par l'acide téréphtalique et ses esters et 70 % en moles ou plus des motifs structurels dérivés de diol dérivent d'éthylèneglycol.

8. Méthode pour produire un récipient multicouche (5) selon l'une quelconque des revendications 1 à 7, dans laquelle au moins un type de la résine de polyamide est une résine amorphe.

9. Méthode pour produire un récipient multicouche (5) selon l'une quelconque des revendications 1 à 8, dans laquelle
la résine de polyamide contient en outre une résine de polyamide amorphe (outre celles correspondant à la résine de polyamide à base de xylylènediamine), et
le rapport de la résine de polyamide amorphe (outre celles correspondant à la résine de polyamide à base de xylylènediamine) à la résine de polyamide à base de xylylènediamine est de 40 à 5 parties en masse de la résine de polyamide amorphe pour 60 à 95 parties en masse de la résine de polyamide à base de xylylènediamine.

10. Méthode pour produire un récipient multicouche (5) selon l'une quelconque des revendications 1 à 9, dans laquelle, dans la résine de polyamide à base de xylylènediamine, l'acide α,ω-dicarboxylique aliphatique à chaîne droite ayant de 4 à 8 atomes de carbone est l'acide adipique, et l'acide dicarboxylique aromatique est l'acide isophtalique.

11. Méthode pour produire un récipient multicouche (5) selon l'une quelconque des revendications 1 à 10, la méthode comprenant en outre la production de l'ébauche (1) et l'ajustement de la teneur en humidité dans l'ébauche (1) produite.

12. Méthode pour produire un récipient multicouche (5) selon la revendication 11, dans laquelle la teneur en humidité est ajustée par stockage de l'ébauche (1) produite dans des conditions excluant l'humidité.

13. Méthode pour produire un récipient multicouche (5) selon l'une quelconque des revendications 1 à 12, dans laquelle l'ébauche (1) a en outre une couche contenant une deuxième résine de polyester en tant que composant principal, et
la couche contenant la résine de polyester en tant que composant principal, la couche contenant la résine de polyamide en tant que composant principal, et la couche contenant la deuxième résine de polyester en tant que composant principal, sont stratifiées dans cet ordre.
